# EUROPEAN PATENT SPECIFICATION

(11) **EP 3 167 950 B1**
(45) Date of publication and mention of the grant of the patent: **07.09.2022**
(21) Application number: 16197677.4
(22) Date of filing: 08.11.2016
(51) Int. Cl.: B01D 46/48, B65H 54/70, D01H 11/00

(54) **INTAKE SYSTEM FOR A SPINNING MACHINE OR A CONE-WINDING MACHINE AND SPINNING MACHINE OR CONE-WINDING MACHINE COMPRISING SAID INTAKE SYSTEM**
ANSAUGSYSTEM FÜR EINE SPINNMASCHINE ODER EINE WICKELMASCHINE UND SPINNMASCHINE ODER WICKELMASCHINE MIT DIESEM ANSAUGSYSTEM
SYSTÈME D'ADMISSION POUR UN MÉTIER À FILER OU UNE MACHINE DE BOBINAGE ET MÉTIER À FILER OU MACHINE DE BOBINAGE COMPRENANT LEDIT SYSTÈME D'ADMISSION

(30) Priority: 10.11.2015 IT UB20155431
(43) Date of publication of application: 17.05.2017
(73) Proprietor: Savio Macchine Tessili S.p.A., 33170 Pordenone (IT)
(72) Inventor: CEOLIN, Mauro, I-33170 PORDENONE (IT); BADIALI, Roberto, I-33170 PORDENONE (IT); COLUSSI, Vittorio, I-33170 PORDENONE (IT)
(74) Representative: Mitola, Marco

(56) References cited:
- EP-A1- 2 045 378
- EP-A1- 2 653 423
- CN-A- 103 572 437
- DE-A1- 4 326 017
- US-A- 4 076 044
- US-A- 4 162 148
- US-A- 4 382 857

## Description

### FIELD OF APPLICATION

This invention relates to an intake system for a textile machine, such as a rotor (open end) spinning machine, a ring type spinning machine, an air-jet type spinning machine, a winding machine and the like, as well as a related textile machine comprising said intake system.

### STATE OF THE ART

As is known, during their operation, the above-mentioned textile machines produce large quantities of dust, lint and waste, which must be suctioned and discarded. This suctioning occurs through appropriate suction units that generate a flow of air that carries the dust, lint and the waste with it. These particles must be appropriately separated from the air flow and then removed, to prevent clogging of the air flow filtration devices, compromising filtration, and therefore the operation of the textile machine. Documents CN 103 572 437 A, US 4 382 857 A, and EP 2653423 A1 disclose intake systems according to the prior art

In particular, almost all rotor (open end) spinning machines use, as intake system, an inertial type filtration through metal filters of suitable hole size in order to suction dust, cotton hulls, various dirt, etc., that form during the cleaning of the in-feed conveyor (by means of the carding machines) to the individual spinning units by means of channels running along the entire textile machine.

The current known intake systems are placed in negative pressure by a centrifugal suction fan, placed upstream of a filter, normally driven in frequency by an inverter (with or without negative pressure transducer), positioned in the machine head, which depending on the orientation can discharge in an aerial or underground channel.

All metal inertial-type filters have a characteristic curve of the final loss of load as a function:
- of the hourly accumulation of dust deposited with a pass-through speed of approximately 1.5 m/s;
- of the type of contaminant to be filtered (in relation to the hole size of the metal mesh of the related filter).

Both the above functions determine the efficiency of the filtering system, which is high at the beginning, i.e., when the filter is clean, and then inevitably declines as dust and fibres accumulate on the filter, resulting in increased loss of load and increased power absorbed.

It should be noted that obtaining a constant and uniform negative pressure in the intake ducts (or, in any case, within a certain negative pressure range) is of fundamental importance for both "spinning" properly and for the "quality" and "goodness" of the yarn produced.

In other words, if you are unable to control the intake, i.e., the negative pressure, you cannot ensure optimal spinning conditions and therefore you obtain an unacceptable yarn because of poor or ununiform quality. In addition, consumption increases make the intake system increasingly less economical in operation, as the degree of clogging of the filter increases.

### PRESENTATION OF THE INVENTION

To solve the above mentioned problems, to date several solutions have been adopted in the known art.

For example, it is known in the art:
- to install differential pressure meters (dpMeters) upstream and downstream of the intake plenum that constantly monitor the pressure values and, when these values diverge from a certain predetermined value, a transducer, by means of a inverter, increases the rpms of the intake motor and consequently increases the negative pressure in the intake ducts to compensate the loss of load that is created with the accumulation of dirt on the metal filter and generate an advantageous negative pressure;
- to time, by means of a PC, the cleaning of the filters by means, for example, of a visual signal (flashing light signal). The duration, i.e., the timing, will vary as a function of the type of raw material, the count of the yarn produced, etc.

In any case, to ensure a constant negative pressure along the ducts and, simultaneously, to have the machine always working so as not to lose productivity, the cleaning of the "saturated" filters, always and only manually, may be performed thanks to a by-pass system (by means of a manually operated button) that, by means of a series of "open - close" shutters, connects the various intake channels to a "second stand-by filter" that is in turn placed in negative pressure always by the main intake, thus excluding the main filters, and thus allowing manual cleaning of various metal filters. After cleaning the by-pass is closed and the intake system is restored with clean filters.

However, even this solution is not without drawbacks.

In fact, the manual activation of the "just-in-time" signal may be made either late, depending on the patrol by the employee responsible (long waiting time), or at irregular intervals; the manual cleaning itself can be performed in a perfunctory manner; the "second filter" can, in turn, also be dirty due to a failure to clean it after the by-pass; the cleaning timed by the PC may not be updated; etc. This solution inevitably implies a considerable and expensive use of labour that, in addition to increasing system management costs, exposes the machine to human errors due to incorrect assessment, failure to patrol, or simply patrolling late. Therefore, such use of labour increases both maintenance costs and errors related to an unperformed or late maintenance.

Furthermore, the use of a by-pass system also involves an overall increase in the dimensions costs or production/maintenance of the intake apparatus of the textile machine, since it, in fact, requires redundant systems. Above solutions are disclosed, for example, from US 4162148 A, DE 4326017 A1, EP 2045378 A1.

Therefore, there is a need to solve the drawbacks and limitations mentioned in reference to the prior art.

This need is met by an intake system according to claim 1.

### DESCRIPTION OF THE DRAWINGS

Further characteristics and advantages of this invention will be more understandable from the following description of its preferred and non-limiting examples of embodiments, in which:
Figure 1 is a perspective view of an intake system partially according to an embodiment of this invention;
Figure 2 is a side view of the intake system of Figure 1, from the side of the arrow II of Figure 1;
Figure 3 is a plan view from above of the intake system of Figure 1, from the side of the arrow III of Figure 1;
Figure 3a shows two graphs comparing the solution of this invention and the prior art solutions, in relation to the negative pressure and power required over time to perform filtration;

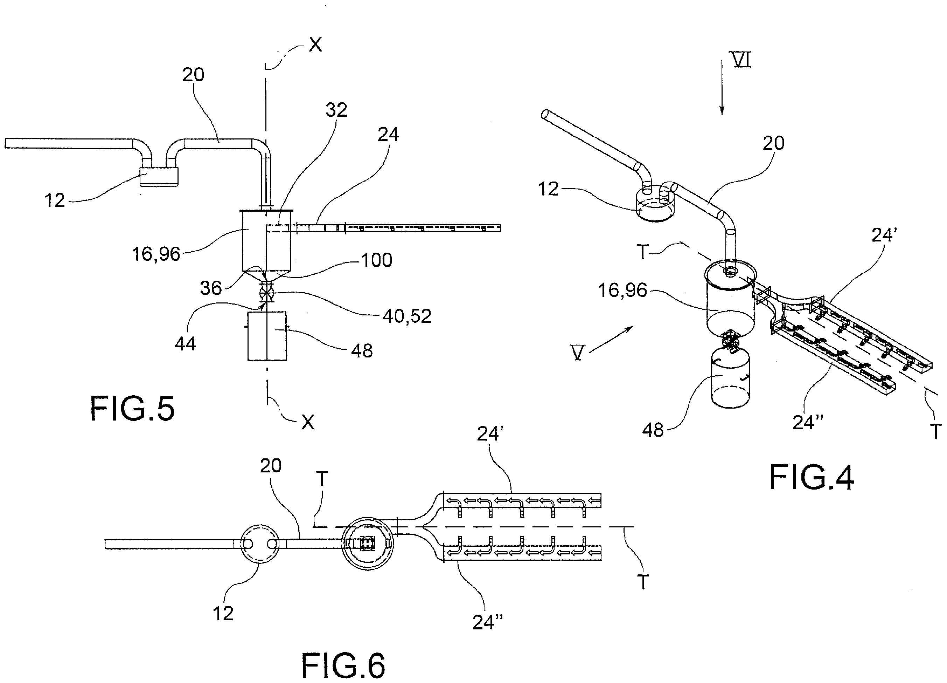

Figure 4 is a perspective view of an intake system partially according to an embodiment of this invention;
Figure 5 is a side view of the intake system of Figure 4, from the side of the arrow V of Figure 4;
Figure 6 is a plan view of the intake system of Figure 4, from the side of the arrow VI of Figure 4;
Figures 7 and 8 are respectively a perspective view and a side view of an intake system partially according to an embodiment of this invention;
Figures 9 and 10 are respectively a perspective view and a side view of an intake system partially according to an embodiment of this invention;

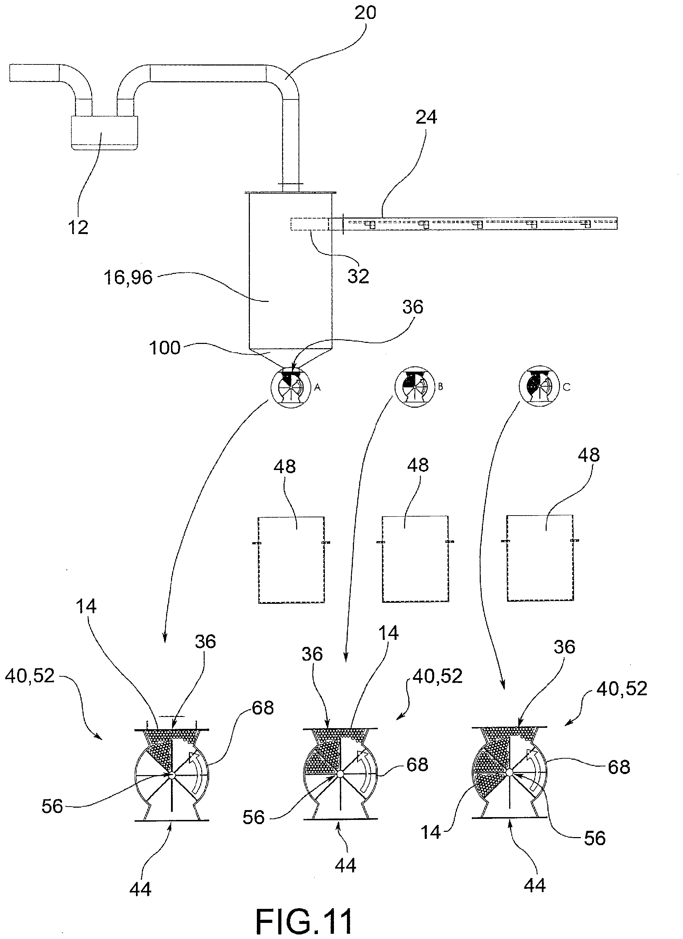

Figures 11, 13 and 14 are side views of intake systems partially according to embodiment variants;
Figures 12 and 14 are side views of the intake system according to embodiments of this invention;
Figures 16 and 17 are side views of different operating phases of a rotary valve applied to an intake system of this invention;

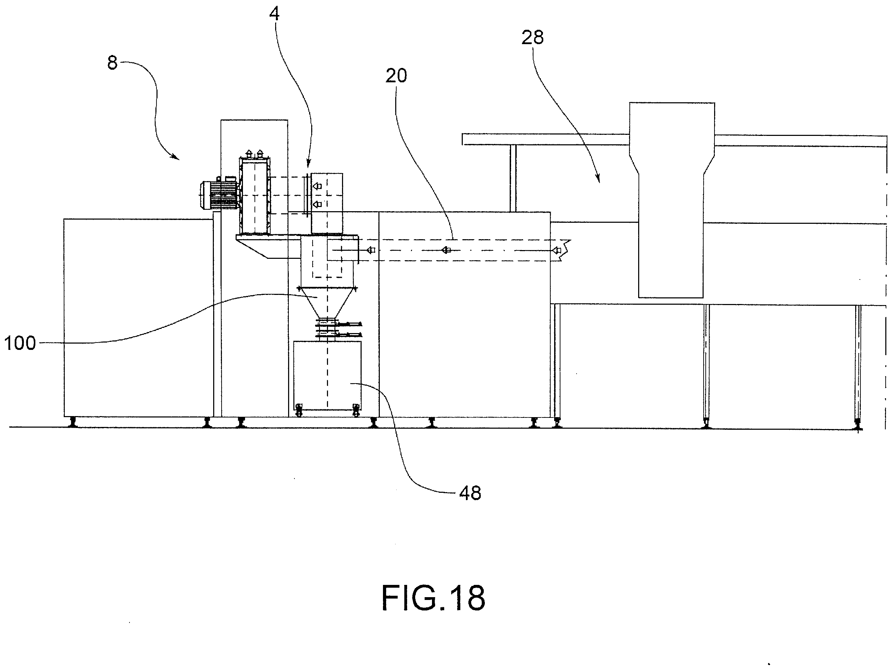

Figure 18 is a schematic view of a textile machine comprising an intake system not according to this invention.

The elements, or parts of elements, in common between the embodiments described below will be indicated with the same reference numbers.

### DETAILED DESCRIPTION

With reference to the above figures, reference number 4 globally indicates an intake system for a textile machine 8, such as an open-end type rotor spinning machine, a ring type spinning machine, an air-jet type spinning machine or a winding machine.

Preferably, as described below, this invention is particularly advantageous when applied to a continuous spinning textile machine, such as an open-end type rotor machine, a ring type spinning machine or an air-jet type spinning machine that requires continuous operation without stops for maintenance and/or cleaning and that also requires operating in conditions that are as constant as possible over time, in order to ensure the quality and uniformity of the yarn produced.

The intake system 4 comprises at least one suction fan 12 to create, by means of a negative pressure, an air intake flow containing spinning and/or winding waste 14, such as dust, lint and the like.

The intake system 4 also comprises at least one filtration device 16 for collecting said waste 14, fluidically connected to said suction fan 12, through an intake duct 20, and at least one waste feed duct 24 of at least one spinning and or/cone-winding unit 28, in correspondence of a feed mouth 32.

The filtration device 16 being suitable to perform the continuous separation of the waste 14 from the air intake flow, and being provided with at least one outlet mouth 36 for the disposal of said waste 14.

In particular, in correspondence of said outlet mouth 36, the intake system comprises sealed conveying means 40 suitable to receive the waste 14 from said outlet mouth 36 and to expel it through a discharge 44, maintaining fluid seal with the outlet mouth 36, so as to maintain the filtration device 16 for the collection of said waste 14 always under negative pressure. In other words, thanks to the fact that the system comprises sealed conveying means 40 suitable to receive the waste 14 from said outlet mouth 36 and to expel it through a discharge 44, maintaining fluid seal with the outlet mouth 36, the filtration device 16 always works under the negative pressure imposed by the suction fan 12.

In this way, the substantial constancy of the intake flow capacity through the intake ducts 20 is ensured. Thanks to the constancy of this capacity, you obtain the constancy of the operating conditions of the various spinning units 28 served by the respective intake ducts 20, and thus the optimum and homogeneous spinning achieved by the textile machine 4.

The intake system 4 comprises at least one collection bin 48 connected to the discharge 44 of the sealed conveying means 40; the collection bin 48 can be emptied when full either manually or automatically, without ever interrupting the spinning cycle.

According to an embodiment, the sealed conveying means 40 comprise a rotary valve 52.

For example, said rotary valve 52 comprises a rotor 56 provided with a plurality of blades or lobes 60 that define respective waste collection compartments 64; the rotor 56 rotates sealingly with respect to a casing 68 connected to the outlet mouth 36 of the filtration device 16.

Preferably, said rotary valve 52 is of the controlled flow type, lateral or central type, so as not to allow the complete filling of each waste collection compartment 64, to avoid the shearing/pinching-off of the waste material 14 accumulated inside the collection compartment itself.

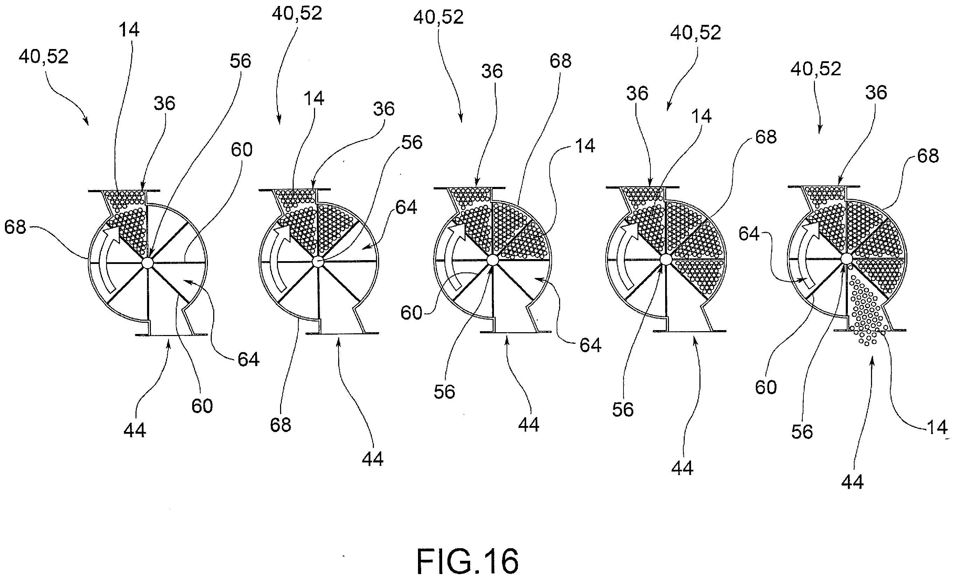

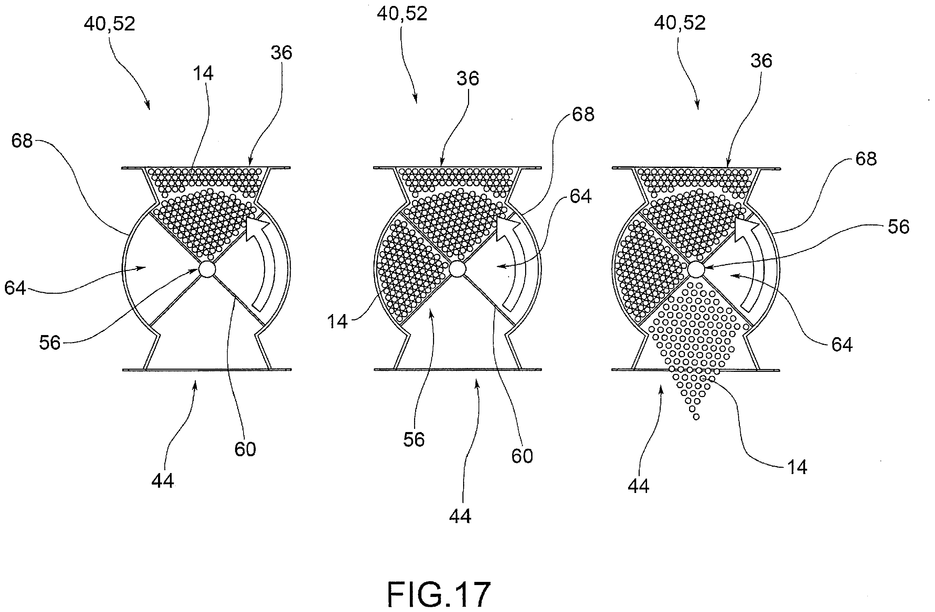

The operation of the rotary valve 52 is illustrated in Figures 16 and 17. In particular, during the rotation of the rotor 56, each collection compartment 64 is placed in communication with the outlet mouth 36 of the filtration device 16 so as to be filled with waste 14. As described above, the filling of each collection compartment 64 is always controlled so as to never be total to avoid the shearing/pinching-off of the waste material 14 accumulated inside the compartment 64 itself. Moreover, the communication between the outlet mouth 36 of the filtration device 16 and each collection compartment 64 is such as to always ensure the hermetic seal of the filtration device 16: in this way the filtration device always works under the negative pressure imposed by the suction fan 12 to which it is fluidically connected by means of the intake duct 20.

Again because of the rotation of the rotor 56, each collection compartment 64 rotates until reaching a lower position, preferably but not necessarily diametrically opposite to that of the outlet mouth 36, in correspondence of which the collection compartment 64 is placed in communication with the discharge 44. The waste 14 can therefore exit said discharge 44 by gravity. The corresponding collection compartment 64 is emptied and, by further rotating together with the rotor 56, will return again to the upper loading position, facing, always sealingly, the outlet mouth 36 so as to be again be partially filled with waste 14.

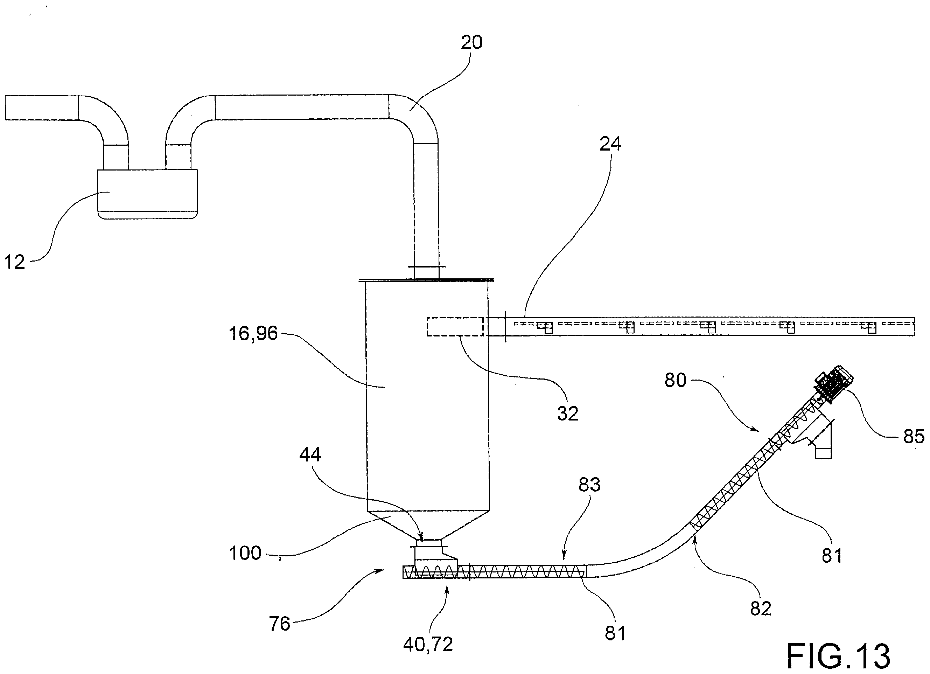

According to a further embodiment, the sealed conveying means 40 comprise a vertical spiral screw 72 (Figure 13).

Said vertical spiral screw 72 extends from a first end 76, directly sealingly facing the outlet mouth 36 of the filtration device 16, so as to ensure in the filtration device 16 the negative pressure created by the suction fan 12, to a second end 80 facing, for example, said collection bin 48.

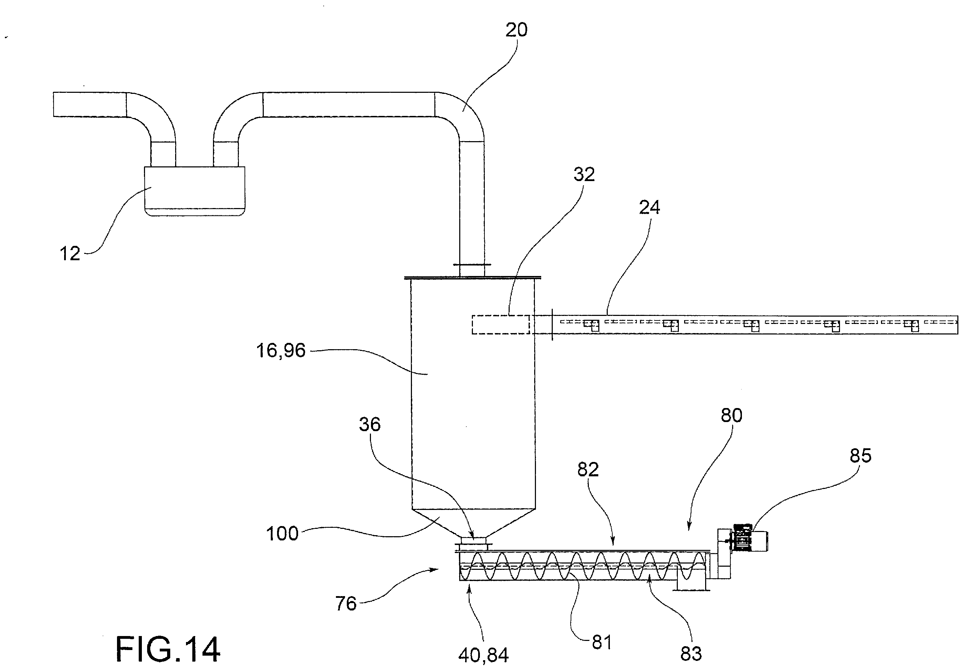

According to a further possible embodiment of this invention, the sealed conveying means 40 comprise a horizontal spiral screw 84 (Figure 14). Also in this case, the horizontal spiral screw 84 extends from a first end 76, directly sealingly facing the outlet mouth 36 of the filtration device 16, so as to ensure in the filtration device 16 the negative pressure created by the suction fan 12, to a second end 80 facing, for example, said collection bin 48.

Both the vertical spiral screw 72 that the horizontal spiral screw 84 comprise a helicoid 81 that identifies, with a respective containment tunnel 82, a plurality of volumes 83 that contain the waste 14 and roto-translate it towards the second end 80. The helicoid is, in turn, set in rotation by motor means 85.

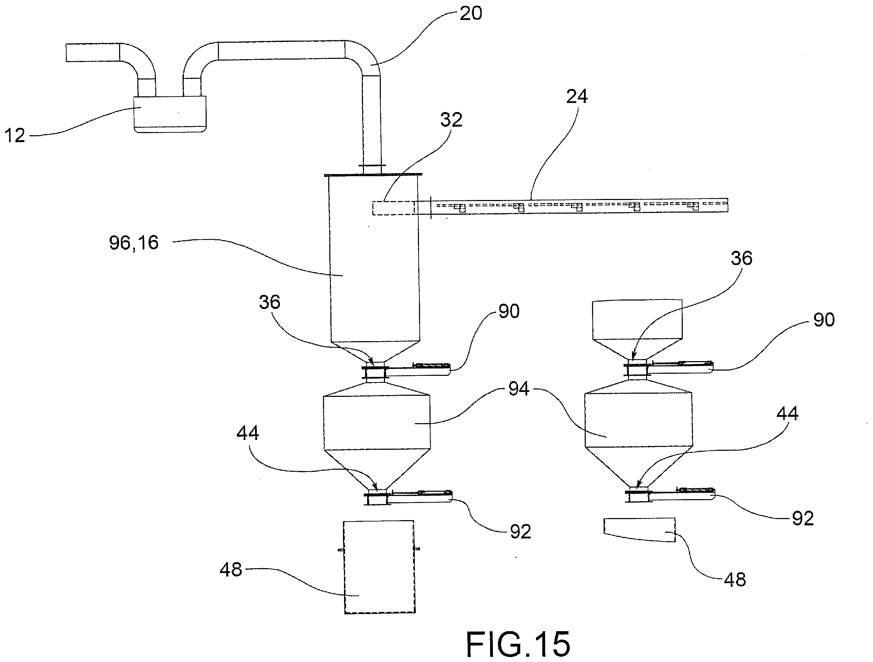

According to a further embodiment of this invention, the sealed conveying means 40 comprise at least one drawer with pneumatic actuators for opening or sealed closing the at least one drawer (Figure 15).

For example, it is possible to provide a first and a second drawer 90,92 arranged in series with each other, respectively upstream and downstream of an intermediate hopper 94 (Figure 15).

The first drawer 90 is arranged upstream of the intermediate hopper 94 and immediately downstream of the outlet mouth 36 of the filtration device 16; obviously the connection with the outlet mouth 36 is hermetically sealed; the second drawer 92 is arranged downstream of the intermediate hopper 94 and immediately upstream of the discharge 44.

It is sufficient to avoid the crossed opening, i.e., the simultaneous opening, of the two drawers 90,92 to avoid the loss of seal of the filtration device 16. So, when the first drawer 90 is opened, the second drawer 92 remains closed so as to allow the filling of the intermediate hopper 94. When the intermediate hopper 94 is full and must be emptied, then the first drawer 90 is closed in advance to preserve the negative pressure in the filtration device 16 imposed by the suction fan 12, and the second drawer 92 is opened only afterwards to allow the emptying of the intermediate hopper 94.

According to the invention, the filtration device 16 comprises a cyclone device 96 that receives in a tangential direction T-T a flow of air containing waste 14 and that separates the waste 14 from the flow of air by means of centrifugal action and acting on the waste 14.

In practice, the air flow enters tangentially into the cyclone device 96 having a conical geometry with a symmetry axis X-X perpendicular to said tangential direction T-T. The flow colliding with the inner walls of the cyclone device 96 thus assumes a spiral movement; the particles of waste 14, subjected to centrifugal force tend to remain against the inner walls of the cyclone device 96 and to be conveyed towards the outlet mouth 36. Thus, the waste 14 moves downwards in a first spiral motion and is conveyed towards the outlet mouth. Moreover, the flow of air, deprived of suspended particles or waste 14, tends to reverse the direction of motion and to create a second spiral motion, rotating opposite to the first, and directed upwards, i.e., towards the intake duct 20 and, from this, towards the suction fan 12.

In particular, the cyclone device 96 comprises a lower hopper 100 that receives the waste 14 and that conveys it towards said outlet mouth 36.

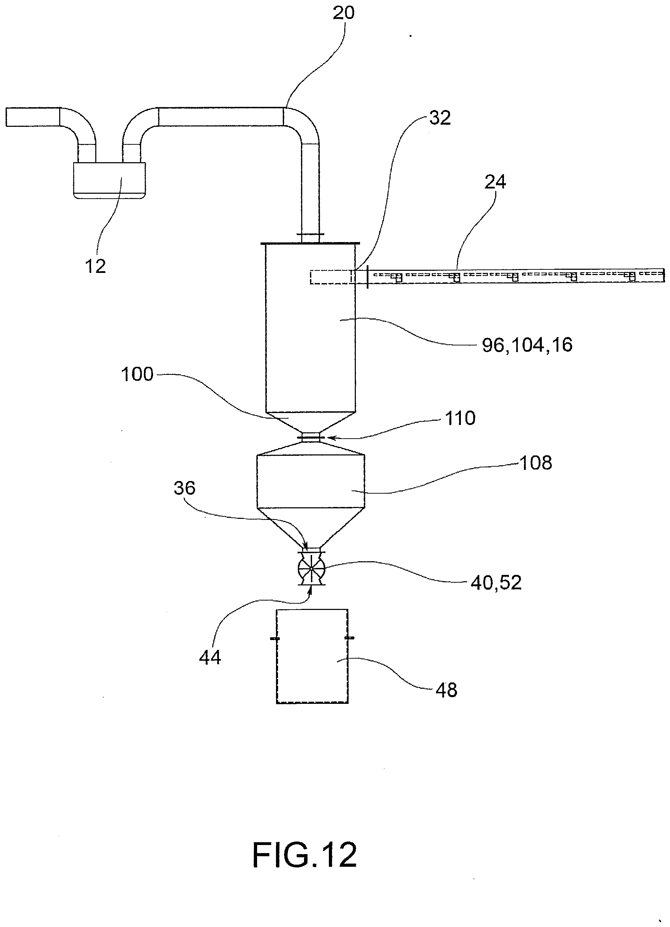

According to the invention, (Figure 12), the cyclone device 96 comprises a first and a second hopper 104,108 that determine a first and a second separation cyclone of the waste 14 and which are superimposed in series, wherein the first hopper 104 is fluidically connected with the suction fan 12 and the waste feed duct 24, the second hopper 108 receives the waste 14 separated by the first cyclone and is provided with said outlet mouth 36 connected to the sealed conveying means 40.

Preferably, between the first and the second hopper 104,108 a constriction 110 is provided to prevent the backflow of waste towards the first hopper 104.

Preferably, the waste feed duct 24 is inserted in the cyclone device 96 through a feed mouth 32 of rectangular section.

Preferably, the intake system 4 is configured so as to have an air flow entrance speed in the cyclone device 96 comprised between 20 and 25 m/sec.

According to an embodiment, the cyclone device 96 is provided with a stabilisation device of the internal air vortex (not shown), in correspondence of a point lower than the feed mouth 32, in correspondence of which the internal vortex, initially descending towards the outlet mouth 36 in a first direction of rotation, reverses the direction of rotation and creates an ascending current directed towards the intake duct 20. In this way, the particles in suspension lose moment of inertia.

According to an embodiment of this invention, the intake system 4 comprises a post-cyclone device 112 located downstream of the cyclone device 96, along the intake duct 20, wherein said post-cyclone device 112 uses the residual rotation of the exit gases to cancel the parasitic drag circulations and stabilise the air flow speed entering the suction fan 12; in this way, the yield of the suction fan 12 is improved.

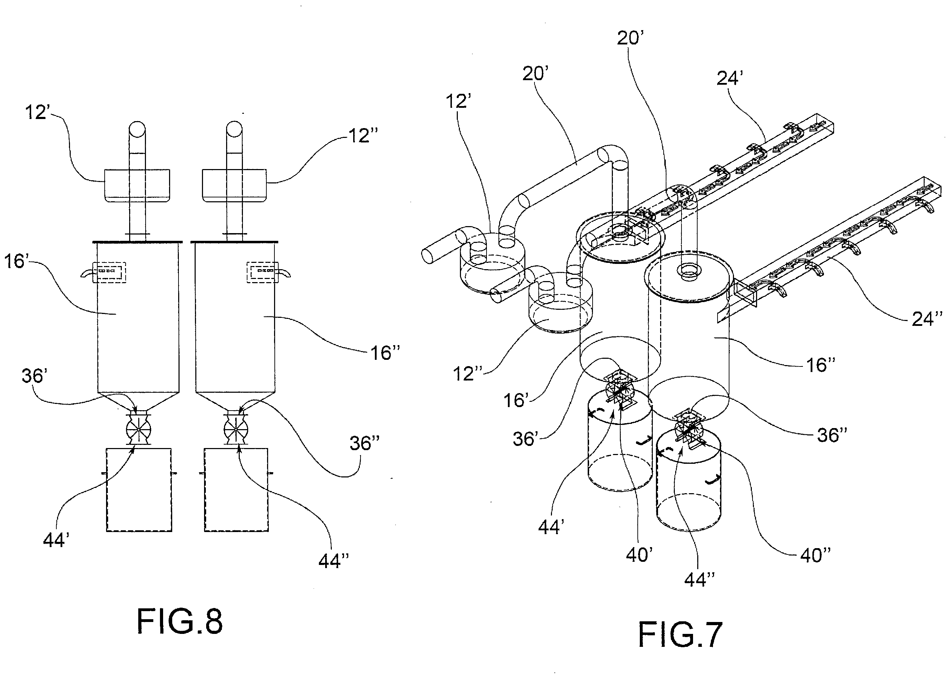

According to a possible embodiment, the intake system comprises two suction fans 12',12" (Figures 7 and 8), two separate filtration devices 16',16" for collecting said waste 14, each fluidically connected to one of said suction fans 12',12" and to a corresponding feed duct 24',24" of scraps of at least one spinning and/or cone-winding unit 28, each filtration device 16',16" being provided with at least one outlet mouth 36',36" for the elimination of said waste 14, wherein, in correspondence of each outlet mouth 36',36", the system comprises sealed conveying means 40',40", suitable to receive the waste 14 from said outlet mouth 36',36'' and expel it through a discharge 44',44", maintaining fluid seal with the outlet mouth 36',36", so as to maintain the filtration device 16',16" for the collection of said waste 14 always under negative pressure.

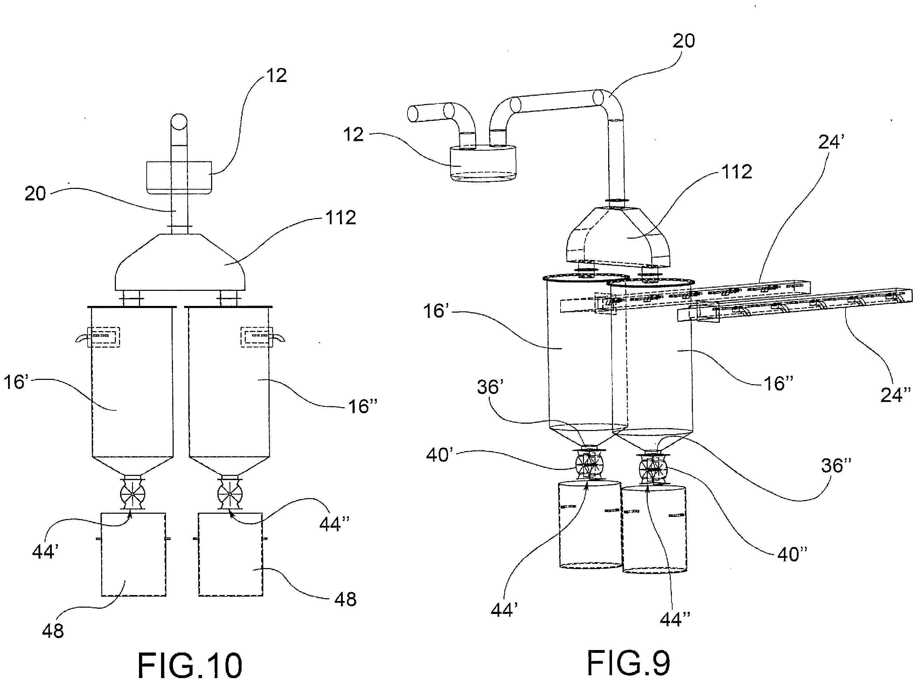

According to a further possible embodiment, the intake system comprises two suction fans 12',12" (Figures 9 and 10), said intake system 4 comprises one suction fan 12, two separate filtration devices 16',16" for collecting said waste, each fluidically connected to said suction fan 12 and to a corresponding waste feed duct 24',24" of least one spinning and/or cone-winding unit 28, each filtration device 16',16" being provided with at least one outlet mouth 36',36" for the elimination of said waste 14, wherein, in correspondence of each outlet mouth 36',36", the system comprises sealed conveying means 40',40", suitable to receive the waste 14 from said outlet mouth 36',36" and expel it through a discharge 44',44", maintaining fluid seal with the outlet mouth 36',36", so as to maintain the filtration device 16',16" for the collection of said waste 14 always under negative pressure.

As can be appreciated from the description, the intake system according to the invention allows overcoming the drawbacks presented in the prior art.

In particular, the intake systems of this invention are able to ensure as much as possible a constant suction or negative pressure in order to achieve optimal spinning conditions and therefore an optimum quality of the yarn. This constancy of the operating conditions is maintained throughout the operation of the textile machine, since the filter is constantly cleaned. Therefore, on the one hand, the machine never needs to be stopped (which would lead to an unacceptable decrease in productivity, especially for an open-end type spinning machine) and, on the other, there is no variation in operating conditions due to a progressive clogging of the filter. In fact, the filter never clogs and is maintained continuously and constantly clean. The constancy of cleaning of the filter determines the constancy of the suction pressure and thus the operating conditions of the textile machine. In the case of a spinning machine, this means that the yarn produced will always be equal: in this way, you achieve constancy of yarn characteristics, constancy of operating conditions and optimum efficiency of the textile machine, in particular of the spinning machine.

In this way, it is not necessary to modify the operating conditions of the intake device, for example by acting on the speed of rotation of the suction fans, to compensate for the progressive loss of load due to progressive clogging of the filters. Thus, even control of the intake system is simplified.

In this way, there is a constant stabilisation of the negative pressure and no loss of load due to partial clogging of the filter: in this way, there are also energy savings.

In addition, there is a guarantee of never having to stop the textile machine to clean the filters, which are constantly cleaned.

Furthermore, it is possible to avoid the use of by-pass systems that would increase the costs and the overall dimensions of the intake system.

Furthermore, the automatic system for discharging the waste, for example, on trolleyed bins or similar implies low use of manual labour and therefore a reduction in system operating costs.

Furthermore, the solution of this invention avoids the use of differential pressure meters, i.e., dpMeters, with the related transducers, inverters and control electronics, as occurs in the prior art solutions.

In addition, you can use aspirators of powers and sizes significantly smaller with respect to the prior art solutions.

In fact, since the filters are never clogged, not even partially, it is not necessary to oversize the suction devices to compensate for load losses due to partial clogging. This allows a further reduction of costs and bulk.

Finally, thanks to this invention, the layout of the machine is simplified, since it allows positioning the aspirator outside the shape of the machine without overheating problems.

In addition, in open-end spinning, the filter cleaning of the prior art solutions is labour-intensive, as a function of the yarn counts and materials. For example, large counts and dirty materials require cleaning the filters even every hour. Thanks to this invention, it is possible to avoid such continuous and costly maintenance, since the filters are cleaned continuously and never clog.

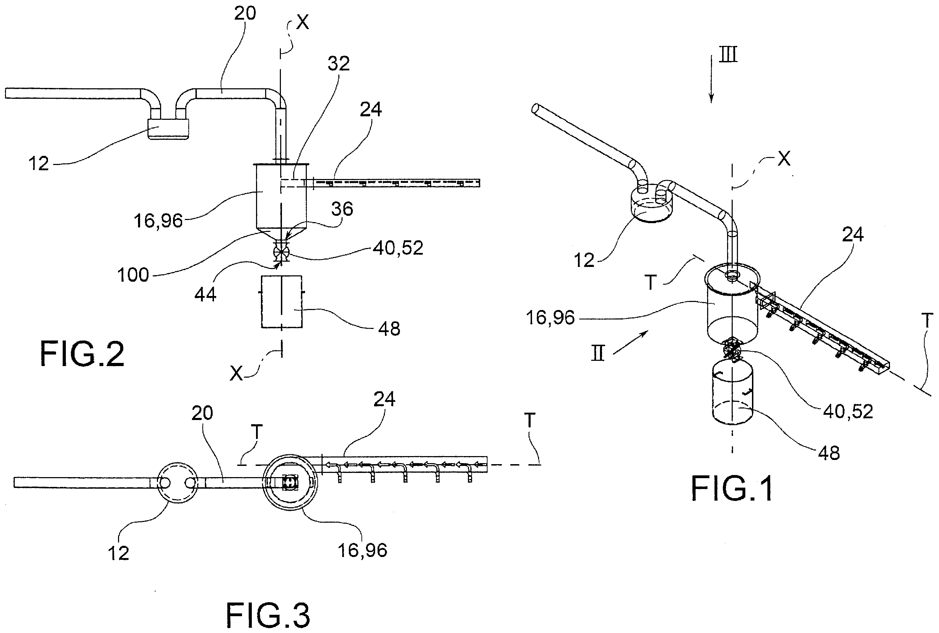

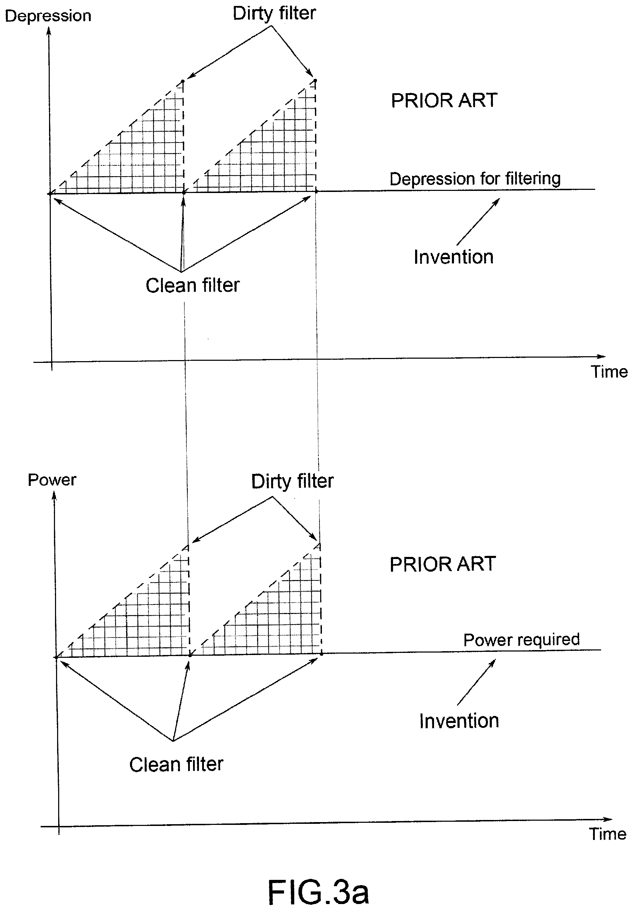

The advantages in terms of negative pressure and power required are clearly visible from Figure 3a. In particular, note how, thanks to this invention, the filter is never dirty/clogged and, therefore, both the negative pressure achieved and the power required are constant over time (horizontal straight lines in the graphs). Instead, in prior art solutions, the related filters become clogged over time (x-axis) due to which negative pressure and power (y-axis) increase linearly as the related degree of clogging increases (inclined straight lines in the graphs). The areas under these inclined straight lines represent precisely the incremental negative pressure and power, therefore the operating costs of the prior art filters that, since they progressively clog, require a progressive increase of performance of the suction fans to compensate for reduced efficiency due to progressive clogging. The continuous and efficient cleaning of the filters of this invention, instead allows constant, regular operation and therefore constant negative pressure and power consumption over time (horizontal lines).

A person skilled in the art, in order to satisfy contingent and specific needs, may make numerous modifications and variations to the intake systems described above, all however contained within the scope of the invention as defined by the following claims.

## Claims

1. Intake system (4) for an open-end type rotor spinning machine, a ring type spinning machine, an air-jet type spinning machine or a cone-winding machine, comprising
- at least one suction fan (12) to create, by means of a negative pressure, an air intake flow containing spinning and/or winding waste (14), such as dust, lint and the like,
- at least one filtration device (16) for collecting said waste (14), fluidically connected to said suction fan (12), through at least one intake duct (20), and fluidically connectable to at least one waste feed duct (24) of at least one spinning and or/cone-winding unit (28), in correspondence of a feed mouth (32),
- the filtration device (16) being suitable to perform the continuous separation of the waste (14) from the air intake flow, and being provided with at least one outlet mouth (36) for the disposal of said waste (14),
- wherein, in correspondence of said outlet mouth (36), the intake system (4) comprises sealed conveying means suitable to receive the waste (14) from said outlet mouth (36) and to expel it through a discharge (44), maintaining fluid seal with the outlet mouth (36), so as to maintain the filtration device (16) for the collection of said waste (14) always under negative pressure,
wherein the filtration device (16) comprises a cyclone device (96) that receives in a tangential direction (T-T) a flow of air containing waste (14) and that separates the waste (14) from the flow of air by means of centrifugal action and acting on the waste (14),
wherein said cyclone device (96) comprises a first and a second hopper (104,108) that determine a first and a second separation cyclone of the waste (14) and which are superimposed in series, wherein the first hopper (104) is fluidically connected with the suction fan (12) and the waste feed duct (24), the second hopper (108) receives the waste (14 ) separated by the first cyclone and is provided with said outlet mouth (36) connected to the sealed conveying means (40).

2. Intake system (4) according to claim 1, wherein the sealed conveying means (40) comprise a rotary valve (52).

3. Intake system (4) according to claim 2, wherein said rotary valve (52) comprises a rotor (56) provided with a plurality of blades or lobes (60) that define respective collection compartments (64) of waste, said rotor (56) rotating sealed in a casing (68), said casing (68) being connected to the outlet mouth (36) of the filtration device (16) and the discharge (44), so as to selectively bring each collection compartment (64) in communication with the outlet mouth (36), for filling the collection compartment (64), and with the discharge (44) for emptying the same compartment.

4. Intake system (4) according to claim 3, wherein said rotary valve (52) is of the controlled flow type, lateral or central type, so as not to allow the complete filling of each waste collection compartment (64), to avoid the shearing/pinching-off of the waste material accumulated inside the collection compartment (64) itself.

5. Intake system (4) according to claim 1, wherein the sealed conveying means (40) comprise a vertical spiral screw (72).

6. Intake system (4) according to claim 1, wherein the sealed conveying means (40) comprise a horizontal spiral screw (84).

7. Intake system (4) according to claim 5 or 6, wherein said vertical spiral screw (72) or said horizontal spiral screw (84) extends from a first end (76), directly sealingly facing the outlet mouth (36) of the filtration device (16), so as to ensure in the filtration device (16), the negative pressure created by the suction fan (12), to a second end (80) facing a collection bin (48).

8. Intake system (4) according to any of the preceding claims, wherein the sealed conveying means (40) comprise at least one drawer with pneumatic actuators for opening or sealed closing the at least one drawer.

9. Intake system (4) according to claim 8, wherein the system comprises a first and a second drawer (90,92) arranged in series with each other, respectively upstream and downstream of an intermediate hopper (94), wherein the first drawer (90) is arranged upstream of the intermediate hopper (94) and immediately downstream of the outlet mouth (36) of the filtration device (16), and wherein the second drawer (92) is arranged downstream of the intermediate hopper ( 94) and immediately upstream of the discharge (44).

10. Intake system (4) according to any of the preceding claims, wherein the intake system (4) comprises a collection bin (48) connected to the discharge (44) of the sealed conveying means (40).

11. Intake system (4) according to any one of the preceding claims, wherein said cyclone device (96) comprises a lower hopper (100) that receives the waste (14) from the first hopper (104) and that conveys it towards said outlet mouth (36) via the second hopper (108)

12. Intake system (4) according to any one of preceding claims, wherein between the first and the second hopper (104,108) a constriction (110) is provided to prevent the backflow of waste (14) towards the first hopper (104).

13. Intake system (4) according to any of preceding claims, wherein the waste feed duct (24) is inserted in the cyclone device (96) through a feed mouth (32) of rectangular section.

14. Intake system (4) according to any of the preceding claims, wherein the intake system (4) is configured so as to have an air flow entrance speed in the cyclone device (96) comprised between 20 and 25 m/sec.

15. Intake system (4) according to any of preceding claims, wherein the cyclone device (96) is provided with a stabilisation device of the internal air vortex, in correspondence of a point lower than the feed mouth (32), in correspondence of which the internal vortex, initially descending towards the outlet mouth (36) in a first direction of rotation, reverses the direction of rotation and creates an ascending current directed towards the intake duct (20).

16. Intake system (4) according to any of preceding claims, wherein the intake system (4) comprises a post-cyclone device (112) located downstream of the cyclone device (96), along the intake duct (20), wherein said post-cyclone device (112) uses the residual rotation of the exit gases to cancel the parasitic drag circulations and stabilise the air flow speed entering the suction fan (12) .

17. Intake system (4) according to any of the preceding claims, wherein said intake system (4) comprises two suction fans (12', 12"), two separate filtration devices (16',16") for collecting said waste (14), each fluidically connected to one of said suction fans (12',12") and to a corresponding feed duct (24',24") of scraps of at least one spinning and/or cone-winding unit (28), each filtration device (16',16") being provided with at least one outlet mouth (36',36") for the elimination of said waste (14), wherein, in correspondence of each outlet mouth (36',36"), the system comprises sealed conveying means (40',40"), suitable to receive the waste (14) from said outlet mouth (36',36") and expel it through a discharge (44',44"), maintaining fluid seal with the outlet mouth (36',36"), so as to maintain the filtration device (16',16") for the collection of said waste (14) always under negative pressure.

18. Intake system (4) according to any of claims 1 to 16, wherein said intake system (4) comprises one suction fan (12), two separate filtration devices (16',16") for collecting said waste (14), each fluidically connected to said suction fan (12) and to a corresponding waste feed duct (24',24") of least one spinning and/or cone-winding unit (28), each filtration device (16',16") being provided with at least one outlet mouth (36',36") for the elimination of said waste (14), wherein, in correspondence of each outlet mouth (36',36"), the system comprises sealed conveying means (40',40"), suitable to receive the waste (14) from said outlet mouth (36',36") and expel it through a discharge (44',44"), maintaining fluid seal with the outlet mouth (36',36"), so as to maintain the filtration device (16',16") for the collection of said waste (14) always under negative pressure.

19. Spinning or cone-winding machine (8) comprising an intake system (4) according to any of claims 1 to 18.

20. Spinning
machine (8) according to claim 19, wherein said spinning
machine (8) is an open-end, ring or air-jet type spinning machine.

## Patentansprüche

1. Ein Einlass- bzw. Ansaug-System (4) für eine Offenend-Rotorspinnmaschine, eine Ringspinnmaschine, eine Luftspinnmaschine oder eine Kegelspinnmaschine, das Folgendes umfasst:
- mindestens ein Sauggebläse (12), um mittels eines Unterdrucks einen Lufteinlassstrom zu erzeugen, der Spinn- und/oder Spulabfälle (14), wie Staub, Flusen und dergleichen, enthält,
- mindestens eine Filtrationsvorrichtung (16) zum Sammeln des genannten Abfalls (14), die mit dem genannten Sauggebläse (12) über mindestens eine Ansaugleitung (20) fluidisch verbunden ist und mit mindestens einer Abfallzuführleitung (24) von mindestens einer Spinn- und/oder Kegelwickel-Einheit (28) im Bereich einer Zuführungsöffnung (32) fluidisch verbunden werden kann,
- wobei die Filtrationsvorrichtung (16) dazu geeignet ist, die kontinuierliche Trennung des Abfalls (14) aus dem Lufteinlassstrom durchzuführen, und mit mindestens einer Auslassöffnung (36) für die Entsorgung des genannten Abfalls (14) versehen ist,
- wobei im Bereich der genannten Auslassöffnung (36) das Ansaugsystem (4) abgedichtete Fördermittel umfasst, die dazu geeignet sind, den Abfall (14) von der genannten Auslassöffnung (36) aufzunehmen und ihn durch einen Auslass (44) auszustoßen, der eine Fluidabdichtung mit der Auslassöffnung (36) aufrechterhält, um die Filtrationsvorrichtung (16) zum Sammeln des genannten Abfalls (14) stets unter Unterdruck zu halten,
wobei die Filtrationsvorrichtung (16) eine Zyklonvorrichtung (96) umfasst, die in einer tangentialen Richtung (T-T) einen Luftstrom aufnimmt, der Abfälle (14) enthält, und die die Abfälle (14) vom Luftstrom mittels Zentrifugalwirkung trennt und auf die Abfälle (14) einwirkt,
wobei die genannte Zyklonvorrichtung (96) einen ersten und einen zweiten Trichter (104, 108) umfasst, die einen ersten und einen zweiten Abscheidezyklon des Abfalls (14) bestimmen und die in Reihe übereinander angeordnet sind, wobei der erste Trichter (104) fluidisch mit dem Sauggebläse (12) und der Abfallzuführleitung (24) verbunden ist, der zweite Trichter (108) den durch den ersten Zyklon abgeschiedenen Abfall (14) aufnimmt und mit der genannten Auslassöffnung (36) versehen ist, die mit dem abgedichteten Fördermittel (40) verbunden ist.

2. Das Ansaugsystem (4) nach Anspruch 1, wobei die abgedichteten Fördermittel (40) ein Drehventil (52) umfassen.

3. Das Ansaugsystem (4) nach Anspruch 2, wobei das genannte Drehventil (52) einen Rotor (56) umfasst, der mit einer Vielzahl von Schaufeln oder Flügeln (60) versehen ist, die entsprechende Abfallsammelfächer (64) definieren, wobei der genannte Rotor (56) abgedichtet in einem Gehäuse (68) rotiert, wobei das genannte Gehäuse (68) mit der Auslassöffnung (36) der Filtrationsvorrichtung (16) und dem Auslass (44) verbunden ist, um jedes Abfallsammelfach (64) selektiv in Verbindung zu bringen mit der Auslassöffnung (36), zum Füllen des Sammelfachs (64), und mit dem Auslass (44) zum Entleeren desselben Fachs.

4. Das Ansaugsystem (4) nach Anspruch 3, wobei das genannte Drehventil (52) vom Typ mit kontrolliertem Durchfluss, vom seitlichen oder zentralen Typ ist, um nicht die vollständige Füllung jedes Abfallsammelfachs (64) zu ermöglichen, um das Abscheren/Abklemmen des im Sammelfach (64) selbst angesammelten Abfallmaterials zu vermeiden.

5. Das Ansaugsystem (4) nach Anspruch 1, wobei die abgedichteten Fördermittel (40) eine vertikale Spiralschnecke (72) umfassen.

6. Das Ansaugsystem (4) nach Anspruch 1, wobei die abgedichteten Fördermittel (40) eine horizontale Spiralschnecke (84) umfassen.

7. Das Ansaugsystem (4) nach Anspruch 5 oder 6, wobei sich die genannte vertikale Spiralschnecke (72) oder die genannte horizontale Spiralschnecke (84) sich erstreckt von einem ersten Ende (76), das der Auslassöffnung (36) der Filtrationsvorrichtung (16) direkt und abdichtend zugewandt ist, um in der Filtrationsvorrichtung (16) den durch das Sauggebläse (12) erzeugten Unterdruck sicherzustellen, bis zu einem zweiten Ende (80), das einem Sammelbehälter (48) zugewandt ist.

8. Das Ansaugsystem (4) nach irgendeinem der vorstehenden Ansprüche, wobei die abgedichteten Fördermittel (40) mindestens eine Schublade mit pneumatischen Betätigungselementen zum Öffnen oder abgedichteten Schließen der mindestens einen Schublade umfassen.

9. Das Ansaugsystem (4) nach Anspruch 8, wobei das System eine erste und eine zweite Schublade (90, 92) umfasst, die in Reihe miteinander stromaufwärts bzw. stromabwärts eines Zwischentrichters (94) angeordnet sind, wobei die erste Schublade (90) stromaufwärts des Zwischentrichters (94) und unmittelbar stromabwärts der Auslassöffnung (36) der Filtrationsvorrichtung (16) angeordnet ist, und wobei die zweite Schublade (92) stromabwärts des Zwischentrichters (94) und unmittelbar stromaufwärts des Auslasses (44) angeordnet ist.

10. Das Ansaugsystem (4) nach irgendeinem der vorstehenden Ansprüche, wobei das Ansaugsystem (4) einen Sammelbehälter (48) umfasst, der mit dem Auslass (44) der abgedichteten Fördermittel (40) verbunden ist.

11. Das Ansaugsystem (4) nach irgendeinem der vorstehenden Ansprüche, wobei die genannte Zyklonvorrichtung (96) einen unteren Trichter (100) umfasst, der den Abfall (14) aus dem ersten Trichter (104) aufnimmt und ihn über den zweiten Trichter (108) zur genannten Auslassöffnung (36) befördert.

12. Das Ansaugsystem (4) nach irgendeinem der vorstehenden Ansprüche, wobei zwischen dem ersten und dem zweiten Trichter (104, 108) eine Verengung (110) bereitgestellt wird, um den Rückfluss von Abfall (14) zum ersten Trichter (104) zu verhindern.

13. Das Ansaugsystem (4) nach irgendeinem der vorstehenden Ansprüche, wobei die Abfallzuführleitung (24) durch eine Zuführungsöffnung (32) mit rechteckigem Querschnitt in die Zyklonvorrichtung (96) eingeführt ist.

14. Das Ansaugsystem (4) nach irgendeinem der vorstehenden Ansprüche, wobei das Ansaugsystem (4) so konfiguriert ist, dass die Luftstrom-Eintrittsgeschwindigkeit in die Zyklonvorrichtung (96) zwischen 20 und 25 m/sec liegt.

15. Das Ansaugsystem (4) nach irgendeinem der vorstehenden Ansprüche, wobei die Zyklonvorrichtung (96) mit einer Vorrichtung zur Stabilisierung des inneren Luftwirbels im Bereich eines Punktes versehen ist, der niedriger liegt als die Zuführungsöffnung (32), an dem der innere Wirbel, der zunächst in einer ersten Drehrichtung zur Auslassöffnung (36) hin abfällt, die Drehrichtung umkehrt und eine aufsteigende Strömung erzeugt, die auf die Ansaugleitung (20) hin gerichtet ist.

16. Das Ansaugsystem (4) nach irgendeinem der vorstehenden Ansprüche, wobei das Ansaugsystem (4) eine Nach-Zyklon-Vorrichtung (112) umfasst, die stromabwärts der Zyklonvorrichtung (96) entlang der Ansaugleitung (20) angeordnet ist, wobei die genannte Nach-Zyklon-Vorrichtung (112) die Restrotation der Austrittsgase nutzt, um die Profilwiderstands-Umläufe *(parasitic drag circulations)* aufzuheben und die Luftströmungsgeschwindigkeit beim Eintritt in das Sauggebläse (12) zu stabilisieren.

17. Das Ansaugsystem (4) nach irgendeinem der vorstehenden Ansprüche, wobei das genannte Ansaugsystem (4) zwei Sauggebläse (12', 12"), zwei getrennte Filtrationsvorrichtungen (16', 16") zum Sammeln des genannten Abfalls (14) umfasst, die jeweils mit einem der genannten Sauggebläse (12', 12") und mit einer entsprechenden Zuführleitung (24', 24") für Abfälle von mindestens einer Spinn- und/oder Kegelwickel-Einheit (28) fluidisch verbunden sind, wobei jede Filtrationsvorrichtung (16', 16") mit mindestens einer Auslassöffnung (36', 36") zur Beseitigung des genannten Abfalls (14) versehen ist, wobei das System im Bereich jeder Auslassöffnung (36', 36") abgedichtete Fördermittel (40', 40") umfasst, die dazu geeignet sind, den Abfall (14) von der genannten Auslassöffnung (36', 36") aufzunehmen und ihn durch einen Auslass (44', 44") auszustoßen, der eine Fluidabdichtung mit der Auslassöffnung (36', 36") aufrechterhält, um die Filtrationsvorrichtung (16', 16") zum Sammeln des genannten Abfalls (14) stets unter Unterdruck zu halten.

18. Das Ansaugsystem (4) nach irgendeinem der Ansprüche von 1 bis 16, wobei das genannte Ansaugsystem (4) ein Sauggebläse (12), zwei getrennte Filtrationsvorrichtungen (16', 16") zum Sammeln des genannten Abfalls (14) umfasst, die jeweils fluidisch mit dem genannten Sauggebläse (12) und einer entsprechenden Abfallzuführleitung (24', 24") mindestens einer Spinn- und/oder Kegelwickel-Einheit (28) verbunden sind, wobei jede Filtrationsvorrichtung (16', 16") mit mindestens einer Auslassöffnung (36', 36") zur Beseitigung des genannten Abfalls (14) versehen ist, wobei das System im Bereich jeder Auslassöffnung (36', 36") abgedichtete Fördermittel (40', 40") umfasst, die dazu geeignet sind, den Abfall (14) von der genannten Auslassöffnung (36', 36") aufzunehmen und ihn durch einen Auslass (44', 44") auszustoßen, der eine Fluidabdichtung mit der Auslassöffnung (36', 36") aufrechterhält, um die Filtrationsvorrichtung (16', 16") zum Sammeln des genannten Abfalls (14) stets unter Unterdruck zu halten.

19. Eine Spinn- oder Kegelwickelmaschine (8), die ein Einlass- bzw. Ansaug-System (4) nach irgendeinem der Ansprüche von 1 bis 18 umfasst.

20. Die Spinnmaschine (8) nach Anspruch 19, wobei die genannte Spinnmaschine (8) eine Offenend-, Ring- oder Luftspinnmaschine ist.

## Revendications

1. Système d'admission (4) pour un métier à filer à rotor de type à fibres libérées, un métier à filer de type à anneaux, un métier à filer de type à jet d'air ou une machine de bobinage sur cônes, comprenant
- au moins un ventilateur d'aspiration (12) pour créer, au moyen d'une pression négative, un flux d'admission d'air contenant des déchets (14) de filage et/ou de bobinage, tels que de la poussière, des peluches et similaires,
- au moins un dispositif de filtration (16) pour collecter lesdits déchets (14), raccordé fluidiquement audit ventilateur d'aspiration (12), à travers au moins un conduit d'admission (20), et pouvant être raccordé fluidiquement à au moins un conduit d'alimentation en déchets (24) d'au moins une unité de filage et/ou de bobinage sur cônes (28), en correspondance d'un orifice d'alimentation (32),
- le dispositif de filtration (16) étant adapté pour réaliser la séparation continue des déchets (14) du flux d'admission d'air, et étant pourvu d'au moins d'un orifice de sortie (36) pour l'élimination desdits déchets (14),
- dans lequel, en correspondance dudit orifice de sortie (36), le système d'admission (4) comprend des moyens de transport étanches convenant pour recevoir les déchets (14) depuis ledit orifice de sortie (36) et pour les expulser à travers une évacuation (44), maintenant une étanchéité fluidique avec l'orifice de sortie (36), de façon à toujours maintenir sous pression négative le dispositif de filtration (16) pour la collecte desdits déchets (14),
dans lequel
le dispositif de filtration (16) comprend un dispositif cyclonique (96) qui reçoit dans une direction tangentielle (T-T) un flux d'air contenant des déchets (14) et qui sépare les déchets (14) du flux d'air au moyen d'une action centrifuge et agissant sur les déchets (14),
dans lequel ledit dispositif cyclonique (96) comprend une première et une seconde trémie (104, 108) qui déterminent un premier et un second cyclone de séparation des déchets (14) et qui sont superposées en série, dans lequel la première trémie (104) est raccordée fluidiquement au ventilateur d'aspiration (12) et au conduit d'alimentation en déchets (24), la seconde trémie (108) reçoit les déchets (14) séparés par le premier cyclone et est pourvue dudit orifice de sortie (36) raccordé aux moyens de transport étanches (40).

2. Système d'admission (4) selon la revendication 1, dans lequel les moyens de transport étanches (40) comprennent une vanne rotative (52).

3. Système d'admission (4) selon la revendication 2, dans lequel ladite vanne rotative (52) comprend un rotor (56) pourvu d'une pluralité de pales ou de lobes (60) qui définissent des compartiments de collecte (64) respectifs de déchets, ledit rotor (56) étant en rotation étanche dans un carter (68), ledit carter (68) étant raccordé à l'orifice de sortie (36) du dispositif de filtration (16) et à l'évacuation (44), de façon à amener sélectivement chaque compartiment de collecte (64) en communication avec l'orifice de sortie (36), pour remplir le compartiment de collecte (64), et avec l'évacuation (44) pour vider ce même compartiment.

4. Système d'admission (4) selon la revendication 3, dans lequel ladite vanne rotative (52) est du type à flux commandé, du type latéral ou central, de façon à ne pas permettre le remplissage complet de chaque compartiment de collecte de déchets (64), afin d'éviter le cisaillement/pincement du matériau de déchets accumulé à l'intérieur du compartiment de collecte (64) lui-même.

5. Système d'admission (4) selon la revendication 1, dans lequel les moyens de transport étanches (40) comprennent une vis sans fin verticale (72).

6. Système d'admission (4) selon la revendication 1, dans lequel les moyens de transport étanches (40) comprennent une vis sans fin horizontale (84).

7. Système d'admission (4) selon la revendication 5 ou 6, dans lequel ladite vis sans fin verticale (72) ou ladite vis sans fin horizontale (84) s'étend depuis une première extrémité (76), directement en face de façon étanche de l'orifice de sortie (36) du dispositif de filtration (16), de façon à assurer dans le dispositif de filtration (16), la pression négative créée par le ventilateur d'aspiration (12), jusqu'à une seconde extrémité (80) en face d'un bac de collecte (48).

8. Système d'admission (4) selon l'une quelconque des revendications précédentes, dans lequel les moyens de transport étanches (40) comprennent au moins un tiroir avec des actionneurs pneumatiques pour ouvrir ou fermer de façon étanche l'au moins un tiroir.

9. Système d'admission (4) selon la revendication 8, dans lequel le système comprend un premier et un second tiroir (90, 92) agencés en série l'un avec l'autre, respectivement en amont et en aval d'une trémie intermédiaire (94), dans lequel le premier tiroir (90) est agencé en amont de la trémie intermédiaire (94) et immédiatement en aval de l'orifice de sortie (36) du dispositif de filtration (16), et dans lequel le second tiroir (92) est agencé en aval de la trémie intermédiaire (94) et immédiatement en amont de l'évacuation (44).

10. Système d'admission (4) selon l'une quelconque des revendications précédentes, dans lequel le système d'admission (4) comprend un bac de collecte (48) raccordé à l'évacuation (44) des moyens de transport étanches (40).

11. Système d'admission (4) selon l'une quelconque des revendications précédentes, dans lequel ledit dispositif cyclonique (96) comprend une trémie inférieure (100) qui reçoit les déchets (14) depuis la première trémie (104) et qui les transporte vers ledit orifice de sortie (36) via la seconde trémie (108).

12. Système d'admission (4) selon l'une quelconque des revendications précédentes, dans lequel entre la première et la seconde trémie (104, 108), un étranglement (110) est prévu pour empêcher le retour de déchets (14) vers la première trémie (104).

13. Système d'admission (4) selon l'une quelconque des revendications précédentes, dans lequel le conduit d'alimentation en déchets (24) est inséré dans le dispositif cyclonique (96) à travers un orifice d'alimentation (32) de section rectangulaire.

14. Système d'admission (4) selon l'une quelconque des revendications précédentes, dans lequel le système d'admission (4) est configuré de façon à avoir une vitesse d'entrée de flux d'air dans le dispositif cyclonique (96) comprise entre 20 et 25 m/s.

15. Système d'admission (4) selon l'une quelconque des revendications précédentes, dans lequel le dispositif cyclonique (96) est pourvu d'un dispositif de stabilisation du vortex d'air interne, en correspondance d'un point plus bas que l'orifice d'alimentation (32), en correspondance duquel le vortex interne, descendant initialement vers l'orifice de sortie (36) dans une première direction de rotation, inverse la direction de rotation et crée un courant ascendant dirigé vers le conduit d'admission (20).

16. Système d'admission (4) selon l'une quelconque des revendications précédentes, dans lequel le système d'admission (4) comprend un dispositif post-cyclonique (112) situé en aval du dispositif cyclonique (96), le long du conduit d'admission (20), dans lequel ledit dispositif post-cyclonique (112) utilise la rotation résiduelle des gaz de sortie pour annuler les circulations de traînée parasite et stabiliser la vitesse de flux d'air entrant dans le ventilateur d'aspiration (12).

17. Système d'admission (4) selon l'une quelconque des revendications précédentes, dans lequel ledit système d'admission (4) comprend deux ventilateurs d'aspiration (12', 12"), deux dispositifs de filtration (16', 16") séparés pour collecter lesdits déchets (14), chacun étant raccordé fluidiquement à l'un desdits ventilateurs d'aspiration (12', 12") et à un conduit d'alimentation (24', 24") correspondant de rebuts d'au moins une unité de filage et/ou de bobinage sur cônes (28), chaque dispositif de filtration (16', 16") étant pourvu d'au moins un orifice de sortie (36', 36") pour l'élimination desdits déchets (14), dans lequel, en correspondance de chaque orifice de sortie (36', 36"), le système comprend des moyens de transport étanches (40', 40"), adaptés pour recevoir les déchets (14) depuis ledit orifice de sortie (36', 36") et les expulser à travers une évacuation (44', 44"), maintenant une étanchéité fluidique avec l'orifice de sortie (36', 36"), de façon à toujours maintenir sous pression négative le dispositif de filtration (16', 16") pour la collecte desdits déchets (14).

18. Système d'admission (4) selon l'une quelconque des revendications 1 à 16, dans lequel ledit système d'admission (4) comprend un ventilateur d'aspiration (12), deux dispositifs de filtration (16', 16") séparés pour collecter lesdits déchets (14), chacun étant raccordé fluidiquement audit ventilateur d'aspiration (12) et à un conduit d'alimentation en déchets (24', 24") correspondant d'au moins une unité de filage et/ou de bobinage sur cônes (28), chaque dispositif de filtration (16', 16") étant pourvu d'au moins un orifice de sortie (36', 36") pour l'élimination desdits déchets (14), dans lequel, en correspondance de chaque orifice de sortie (36', 36"), le système comprend des moyens de transport étanches (40', 40"), convenant pour recevoir les déchets (14) depuis ledit orifice de sortie (36', 36") et les expulser à travers une évacuation (44', 44"), maintenant une étanchéité fluidique avec l'orifice de sortie (36', 36"), de façon à toujours maintenir sous pression négative le dispositif de filtration (16', 16") pour la collecte desdits déchets (14).

19. Métier à filer ou machine de bobinage sur cônes (8) comprenant un système d'admission (4) selon l'une quelconque des revendications 1 à 18.

20. Métier à filer (8) selon la revendication 19, dans lequel ledit métier à filer (8) est un métier à filer de type à fibres libérées, à anneaux ou à jet d'air.
